# EUROPEAN PATENT APPLICATION

(11) **EP 2 246 791 A1**
(43) Date of publication of application: **03.11.2010**
(21) Application number: 08870717.9
(22) Date of filing: 09.12.2008
(51) Int. Cl.: G06F 13/00, H04M 11/00

(54) **COMMUNICATION TERMINAL AND METHOD FOR CONTROLLING CONNECTION OF COMMUNICATION DEVICE**

(30) Priority: 17.01.2008 JP 2008007999
(71) Applicant: Panasonic Corporation, Kadoma-shi Osaka 571-8501 (JP)
(72) Inventor: TAMARA, Tomofumi, Osaka 540-6207 (JP)
(74) Representative: Grünecker, Kinkeldey, Stockmair & Schwanhäusser Anwaltssozietät
(86) International application number: PCT/JP2008/003681
(87) International publication number: WO 2009/090707

(57) **Abstract**

There are provided a portable terminal device and a communication device connect control method that enable lessening of a time for waiting device search processing and processing for acquiring a DDD or an SDD of a normally-connected device. A device connect management unit 108 determines, in accordance with information about a communication network retained in a connect history information storage unit 109, whether or not connection with a communication device is feasible. When connection is feasible, connection is established with the communication device in accordance with information about a communication device connected to the communication network retained in the connect history information storage unit 109.

## Description

### <Technical Field>

The present invention relates to a communication terminal device and a communication device connection control method and is utilized for making an access from a communication terminal device to information about various types of devices connected to a communication network or controlling devices, via the communication network, such as a home network, for connecting; for instance, consumer electronics, computers, and peripheral devices at home.

### <Background Art>

Digital home appliances equipped with a network communication function, such as an HDD recorder, a TV, and a game machine, have recently become prevalent along with development of a communication network technique and a communication device. Accordingly, a home network that connects the digital home appliances with a PC (Personal Computer) and another peripheral device via a communication network in a communicable manner has come to become widespread among homes.

In relation to such a home network, standardization has been pursued with a view toward seamless sharing digital data contents, like music data, photographic data, and moving picture data, among a variety of devices, such as a digital home appliance, a PC, and a mobile device. By way of an example, there is available a guideline (Home Network Device Interoperability Guideline) defined by a DLNA (Digital Network Alliance). The design guide line is hereinbelow referred to as a "DLNA guideline."

By means of the DLNA guideline, the home network provides users with convenience and an amenity, and it is predicted that there will be increasing proliferation of the home network in the future.

In order to accomplish enhanced interconnectivity among devices in the home network, the DLNA guideline is set by selecting existing standards techniques. In relation to the DLNA guidelines, a UPnP (Universal Plug and Play) technique described in connection with Non-Patent Document 1 and a UPnP AV (Audio Visual) technique are selected as a definition of a method for detecting and controlling a device in the home network and a method for searching, selecting, and managing contents.

According to the UPnP, a "service," a "device," and a "control point" are defined. The term "service" designates a logical unit for providing a predetermined service, and the term "device" is a logical unit pertaining to a functional element having one or more services. The control point designates a logical unit pertaining to a functional element for controlling one or more services. The device and the control point defined by the UPnP are referred to as a "UPnP device" and a "UPnP control point."

The UPnP device and the UPnP control points notify and detect service, a status, and the like, through use of an SSDP (Simple Service Discovery Protocol). Notification of service, a status, and the like, is performed by transmission of an SSDP message. The SSDP message includes an URL of a device description document (DDD) described by use of an XML (Extensible Markup Language). The DDD includes detailed information about a device, a general description of service to be provided, a URL of a service description document (SDD), and the like. The SDD includes descriptions of detailed information about the service.

The UPnP AV technique defines a device and service relating to control of an AV device via a network. A UPnP device having service defined by the UPnP AV technique (service for providing AV contents information, service for controlling reproduction of AV contents, and the like) is controlled and managed by a UPnP AV message.

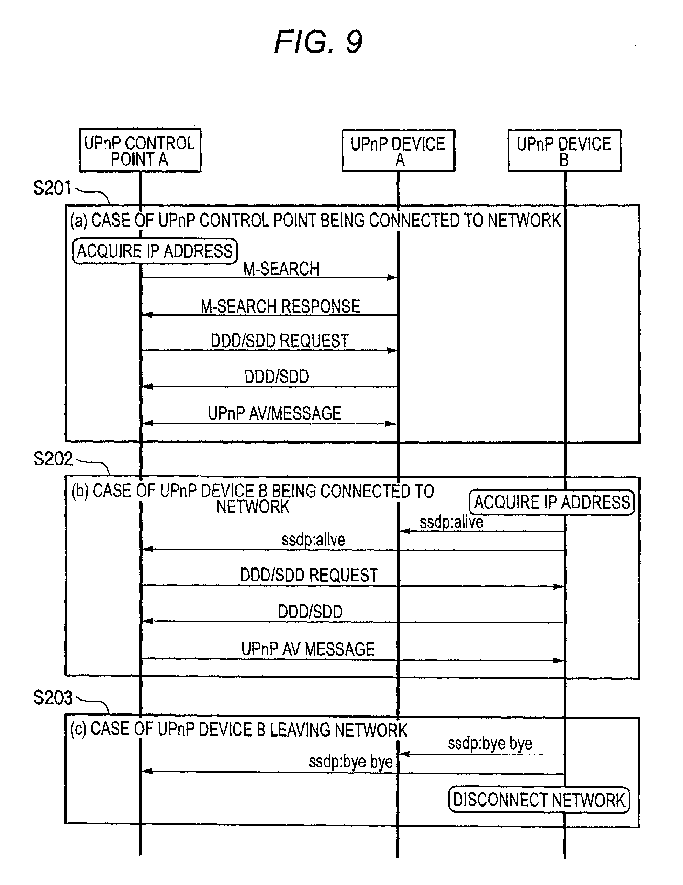

A method for notifying and detecting service exchanged between the UPnP device and the UPnP control point is described by reference to Fig. 9. An example shown in Fig. 9 is based on the assumption that only a "UPnP device A" would be connected to a network in an initial state and that a "UPnP control point A" and a "UPnP device B" would be later connected to the network, as required.

The "UPnP control point A" acquires an IP address when connected to the network. Subsequently, device search processing is performed as to whether or not a device having desired service is in the network, by means of sending an M-SEARCH message of the SSDP through multicast transmission. When the "UPnP device A" received the M-SEARCH message provides the service descried in the M-SEARCH message, the device transmits an M-SEARCH response message to the "UPnP control point A." The "UPnP control point A" requests a URL of a DDD included in the M-SEARCH response message to send a DDD, thereby acquiring the DDD. Likewise, the "UPnP control point A" also acquires an SDD. Subsequently, the "UPnP control point A" controls and manages the "UPnP device A" by means of the UPnP AV technique (step S201).

When the "UPnP device B" is connected to the network and has acquired an IP address, the type of the device and service belonging to the device are sent as an ssdp:alive message to the network through multicast transmission. The "UPnP control point A" acquires a DDD and an SDD of the "UPnP device B" according to the received ssdp:alive message, and controls and manages the "UPnP device B" by means of the UPnP AV technique (step S202).

When the "UPnP device B" leaves the network, an ssdp:byebye message notifying withdrawal is sent through multicast transmission (step S203). Transmission of the ssdp:byebye message is a recommended function.

The ssdp:alive message includes a description of a period during which the UPnP device and service notified by the ssdp:alive message are valid. When the ssdp:byebye message is not transmitted, the UPnP control point nullifies the service, or the like, as a result of elapse of the valid period described in the received ssdp:alive message.

As mentioned above, when connected to the network, the UPnP control point device can automatically search for a UPnP device that provides various services.

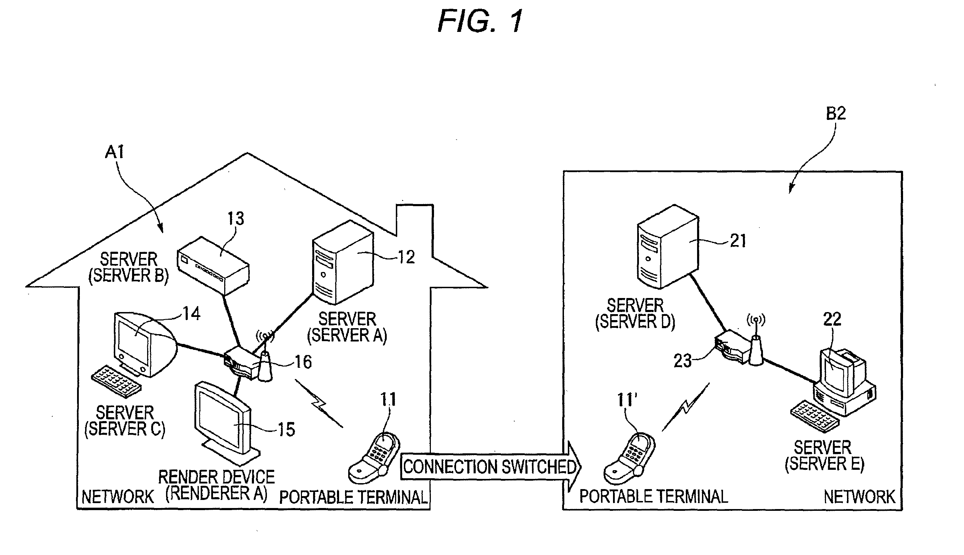

For instance, in a communication system, such as that shown in Fig. 1, a portable terminal 11 having a function of a UPnP control point transmits an M-SEARCH message when connected to a network A1 that is a home network (including a time when the system is at power-up and a time when an application is launched), thereby performing device search processing for searching for UPnP devices 12 to 15 and controlling and managing the detected UPnP devices by means of the UPnP AV technique. In the communication system shown in Fig. 1, the UPnP devices 12 to 14, 21, and 22 are servers that retain contents and provide the contents to another device, and the UPnP device 15 is a renderer that reproduces the contents retained by the sever under control of the UPnP control point device.

Incidentally, in order to detect all of the servers 12 to 14 existing in the network A1, the foregoing home network must wait responses from all of the servers at the time of detection. On that occasion, the respective servers differ from each other in terms of a time to return a response. Moreover, since the portable terminal 11 is uncertain about a time when the respective servers return responses. Therefore, detection of a server is deemed to have been completed at a point in time when a timeout occurs after a return from each of the servers has been waited for a certain period of time; for instance, 10 seconds. Consequently, there is a problem of a device search processing wait time of about 10 seconds arising every time a connection is established with the network A1.

Further, each time the portable terminal 11 is connected to the network A1 or every time an application is launched, the user must select a sever to be connected from among a list of detected servers. A problem is negligible when the number of servers in the network A1 is small. However, as the number of servers increases, operation for selecting a server becomes more troublesome, which raises a problem of deterioration of convenience.

Patent Document 1 proposes a technique for solving the problem and shortening a server search time while maintaining a function for automatically searching for a server, thereby enhancing user operability. Specifically, the technique described in connection with Patent Document 1 employs a method for: storing a specific server in advance; interrupting device search processing even in the middle of device search processing if the specific sever is found by means of device search processing; and establishing a connection with the server. A device detection processing wait time is thereby curtailed, and server select operation to be performed by the user is also lessened. The specific server designates a server finally browsed in a preceding session.
Patent Document 1: Japanese Patent No. 3888532
Non-Patent Document 1: UPnP Device Architecture 1.0, Version 1.0.1, 06 May 2003

### <Disclosure of the Invention>

### <Problem that the Invention is to solve>

When the device having the UPnP control point function is a portable mobile terminal, the device can be connected to a plurality of home networks or local networks according to circumstances or locations. For instance, in an example communication system shown in Fig. 1, mutually-independent networks A1 and B2 are present at different locations, respectively. The portable terminal 11 is connected to either the network A1 or the network B2 according to a change in the circumstance of a destination or a location.

As mentioned above, when a current connect destination network(B2) of the terminal is different from the previously-connected network (A1), the terminal cannot find the previously-connected server even when the technique described in connection with Patent Document 1 is adopted. Accordingly, the terminal must inevitably perform previously-described device search processing until a timeout occurs. For this reason, a user's wait time caused by device search processing is not curtailed.

In the home network, home appliances and a desktop PC are connected to the network at all times, and the DDD or the SDD is not frequently updated. On the contrast, according to the technique described in connection with Patent Document 1, processing for acquiring a DDD or an SDD is performed for all found devices until a specific server is found. Therefore, even when the home appliances and the desktop PC are found, processing for acquiring a DDD or an SDD is likewise performed. For these reasons, when the home appliances and the desktop PC are connected to the network, processing for acquiring a DDD or an SDD becomes redundant.

The present invention has been conceived in light of the circumstances and aims at providing a communication terminal device and a communication device connection control method that enable curtailing of a time for waiting device search processing and lessening of processing for acquiring a DDD or an SDD from normally-connected devices.

### <Means for Solving the Problem>

The objective of the present invention is accomplished by the following configuration.
A communication terminal device that connects to an arbitrary communication device via a communication network, comprises:
a transceiving unit that connects to the communication network, thereby performing communication;
a connect history information storage unit that retains information about the communication network and information about a communication device connected to the communication network in a mutually-associated manner; and
a device connect management unit that determines, in accordance with information about the communication network retained in the connect history information storage unit, whether or not connection with the communication device is established and that connects to the communication device, in accordance with information about the communication device connected to the communication network retained in the connect history information storage unit, when connection is possible.

In the portable terminal device, the device information management unit manages information that associates the communication network with a specific device, for each independent communication network. Therefore, even when the communication network, which is a connect destination, has changed, a user's wait time consumed during establishment of connection with the terminal can be shortened by utilization of the information.

The objective of the present invention is accomplished by the following configuration.
A communication device connect control method for establishing connection with an arbitrary communication device via a communication network comprises:
recording information about the communication network and information about a communication device connected to the communication network in a mutually-associated manner; determining, in accordance with information about the recorded communication network, whether or not connection with the communication device is established; and
establishing connection with the communication device, in accordance with information about the communication device connected to the recorded communication network, when connection is possible.

Under the communication device connect control method, information that associates the communication network with a specific device is managed for each independent communication network. Therefore, even when the communication network at a connect destination has changed, a user's wait time consumed during establishment of connection with the terminal can be shortened by utilization of the information.

A program of the present invention is a program for causing a computer to execute processing pertaining to procedures of the communication device connect control method of the present invention.

According to the program, information that associates the communication network with a specific device is managed for each independent communication network. Therefore, even when the communication network at a connect destination has changed, a user's wait time consumed during establishment of connection with the terminal can be shortened by utilization of the information.

For instance, when a plurality of independent communication networks A1 and B2 are present as in the communication system shown in Fig. 1, a portable terminal device (equivalent to a portable terminal 11) may connects to the communication network A1 or the communication network B2 according to a circumstance and a location. Specifically, after established communication with a device connected to the portable terminal device via the communication network A1 (any one of devices 12 to 15), the portable terminal device may switch a connect destination from the communication network A1 to the communication network B2, to thus establish communication with another device (21, 22) connected to the communication network B2. In this case, since the device at the connect destination changes, a device at the connect destination must be searched at all times in the related art, and device search processing must be carried out until a timeout arises, which in turn makes a time required to establish connection becomes longer. However, in the present invention, when an attempt is made to establish connection with the device with which connection was established in the past, there is a high probability of information required to establish connection with the device being managed by the device connect management unit even when the connect destination of the communication network changed. For these reasons, device search processing is omitted by utilization of the information, whereby a user wait time consumed when the portable terminal device connects to a desired device can be shortened.

The portable terminal device of the present invention is also characterized by further comprising: a device detection unit that detects a communication device which is connectable via the communication network, wherein the connect history information storage unit stores, in a mutually-associated fashion, network identification information about the connected communication network and device identification information about the communication device detected by the device detection unit via the communication network.

In the portable terminal device, the connect history information storage unit stores, for each communication network at a connect destination, the network identification information and the device identification information in a mutually-associated manner. Therefore, even when the communication network at a connect destination has changed, it is possible to acquire information required to establish connection with the device, to which the portable terminal device connected in the past, without performance of device search processing.

Envisaged network identification information includes; for instance, an SSID (Service Set Identifier), a MAC address of a wireless LAN-AP (access point), a network address, and the like. Envisaged device identification information includes a MAC address, an IP address, device information (DDD), service information (SDD), and the like, assigned to the device.

The portable terminal device of the present invention is also characterized in that the connect history information storage unit retains, as the device identification information, both fixed address information and variable address information about the communication device.

The portable terminal device of the present invention is also characterized in that the fixed address information is a MAC address.

The portable terminal device of the present invention is characterized in that the variable address information is an IP address.

Even in a case where connection is established with a communication network in which addresses of respective devices will change as in an IP (Internet Protocol) network, the portable terminal device can connect to a device of interest in accordance with information about past connections (history information) retained in the connect history information storage unit. Specifically, even in the case of a single device, variable address information assigned to the device may change. On the contrary, fixed address information remains unchanged. Therefore, it is possible to determine whether or not the device of interest is identical with that detected in the past, by checking the fixed address information.

The portable terminal device of the present invention is also characterized in that the device connect management unit
acquires the variable address information about the communication device from the connect history information storage unit and causes the transceiving unit to transmit a fixed address request for inquiring of the communication network about fixed address information corresponding to the acquired variable address information;
compares first fixed address information received by the transceiving unit as a response to the fixed address request with second fixed address information about the communication device stored in the connect history information storage unit; and
determines that the communication device is connected to the communication network when a match exists between the first fixed address information and second fixed address information, and transmits a control message to the communication device while taking the variable address information as an address when the communication device is determined to be connected to the communication network.

The portable terminal device can automatically determine whether or not connection can again be established with a specific device by use of information retained in the connect history information storage unit, without performance of device search processing. Specifically, when changes arise in a state of connections of respective devices in the respective communication networks (e.g., withdrawal of the connected devices, addition of new devices, and the like) or when re-assignment of addresses arises after information about a specific device has been registered in the connect history information storage unit of the portable terminal device as a result of device search processing, a device corresponding to the specific device retained in the connect history information storage unit will disappear from the communication network, or a match between the corresponding device and its address and the information in the connect history information storage unit will be lost. Thus, it becomes impossible to establish re-connection with the specific device connected in the past, in accordance with the information. Accordingly, an inquiry about fixed address information corresponding to variable address information about a specific device acquired by the portable terminal device from the connect history information storage unit is addressed to the communication network at the connect destination. First fixed address information acquired as a response to the inquiry is compared with second fixed address information registered in the history information storage unit. It is thereby possible to ascertain whether or not the specific device registered in the connect history information storage unit is still connected to the communication network.

The portable terminal device of the present invention is characterized in that the connect management unit performs processing for detecting the communication device by use of the device detection unit when the communication device is determined not to be connected.

In relation to the portable terminal device, even in a case where a change in a state of a communication network to which the portable terminal device is connected, or the like, has occurred, if a corresponding specific device is connected to the communication network, it is possible to detect and access the device. As a matter of course, when device detection processing is performed, a wait time of the order of 10 seconds is required as in the related art. However, the wait time can be significantly shortened, so long as no change exists in the state of the communication network at the connect destination.

### <Advantage of the Invention>

According to the present invention, information for associating an independent communication network with a specific device is managed for each independent communication network. Even when a communication network at a connect destination has changed, a user's wait time consumed when the terminal is connected to the communication network can be shortened by utilization of the information. When the terminal makes an access to a device in a substantially-unchanged connect status or environment, like a device connected to each of the communication networks at all times, processing for acquiring a device description document (DDD) or service description document (SDD) can also be omitted.

### <Brief Description of the Drawings>

[Fig. 1] It is a block diagram showing an example configuration of a network of an envisaged communication system of an embodiment.
[Fig. 2] It is a block diagram showing a configuration of a portable terminal device of the embodiment.
[Fig. 3] It is a diagram showing an example configuration of a connect destination server table in the portable terminal device shown in Fig. 2.
[Fig. 4] It is a diagram showing an example configuration of a connect history information table in the portable terminal device shown in Fig. 2.
[Fig. 5] It is a sequence chart showing general operation performed when the portable terminal device is connected to a server in the communication system shown in Fig. 1.
[Fig. 6] It is a flowchart showing specifics of connect information acknowledgment processing performed when the portable terminal device shown in Fig. 2 is connected to a network.
[Fig. 7] It is a flowchart showing specifics of device determination processing performed when the portable terminal device shown in Fig. 2 is connected to a network.
[Fig. 8] It is a flowchart showing specifics of device search processing performed when the portable terminal device shown in Fig. 2 is connected to a network.
[Fig. 9] It is a sequence chart showing basic operation for device search and service notification conforming to a UPnP technique.

### <Descriptions of the Reference Numerals and Symbols>

- A1, B2: NETWORK
- 11: PORTABLE TERMINAL
- 12: TO 14 SERVER
- 15: RENDERER DEVICE
- 16: WLAN ROUTER
- 21, 22: SERVER
- 23: WLAN ROUTER
- 101: SERVER CONTENT MANAGEMENT UNIT
- 102: GUI
- 103: CONTENT MANAGEMENT PROCESSING UNIT
- 104: PLUG-IN
- 105: SOUND/VIDEO OUTPUT UNIT
- 106: CONNECT DESTINATION SERVER NAME STORAGE UNIT
- 107: TRANSCEIVING UNIT
- 108: DEVICE CONNECTION MANAGEMENT UNIT
- 109: CONNECT HISTORY INFORMATION STORAGE UNIT

### <Best Mode for Implementing the Invention>

One specific embodiment of a communication terminal device and a communication device connection control method of the present invention are hereunder described by reference to Figs. 1 through 9. An embodiment of the present invention is described in connection with a case where a portable terminal device applies, as an example, to the communication terminal device.

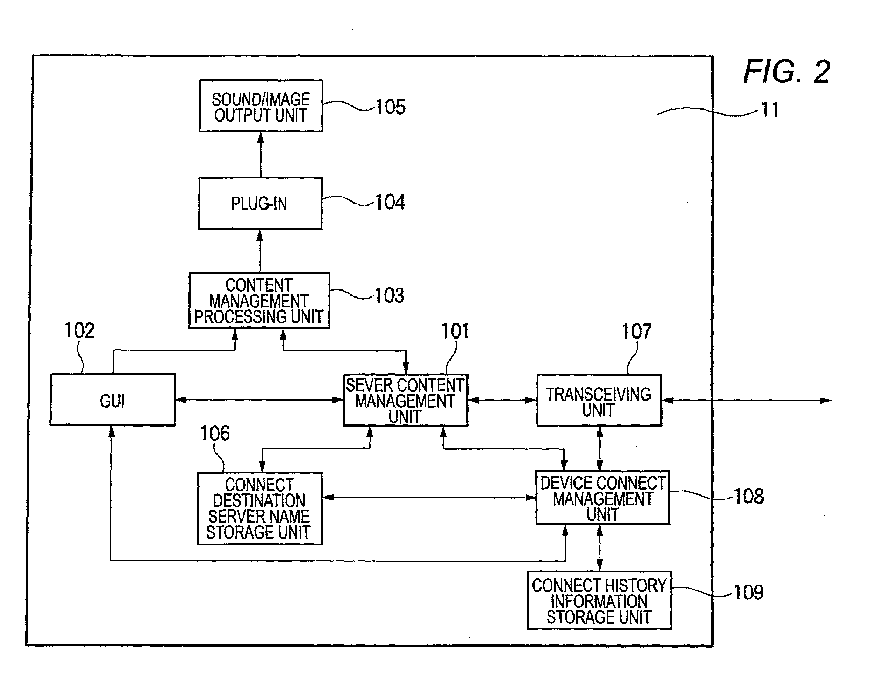

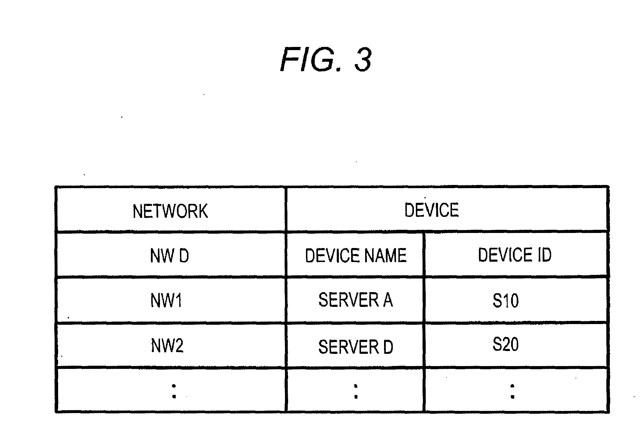

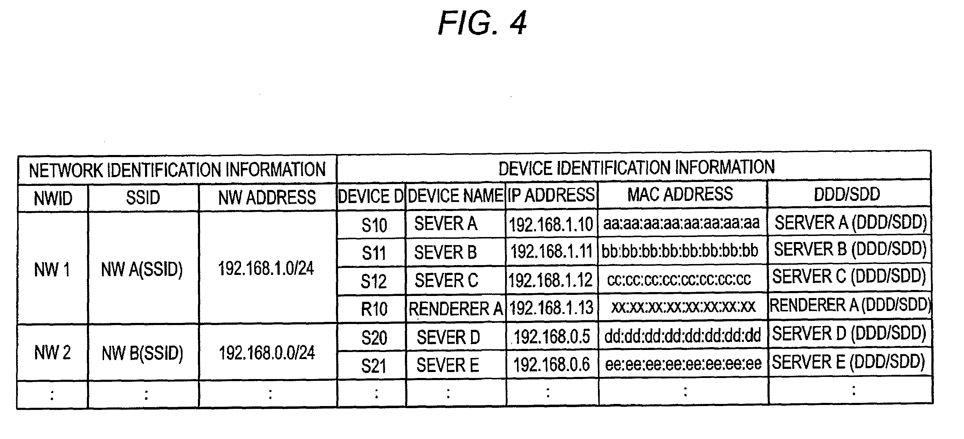

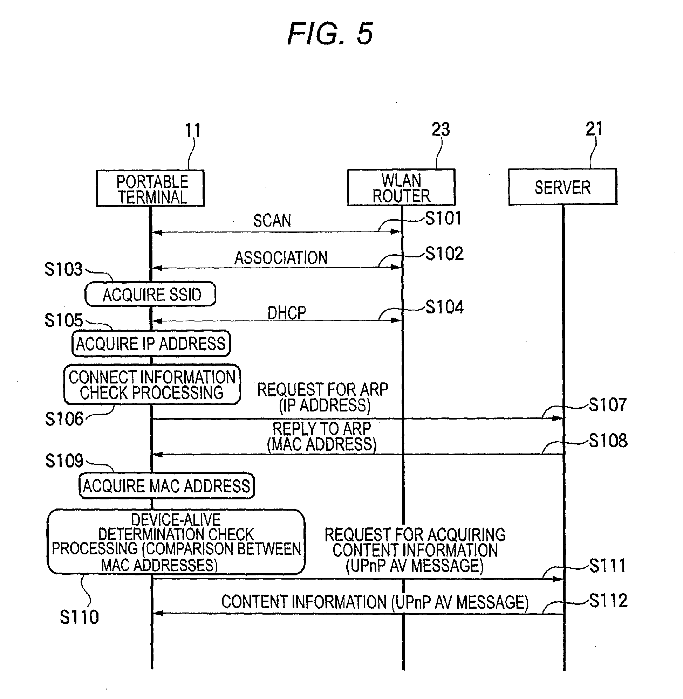

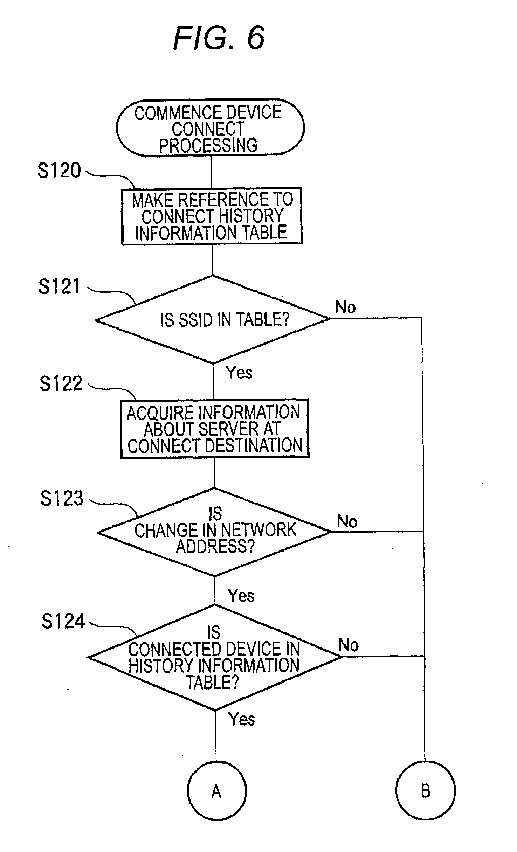

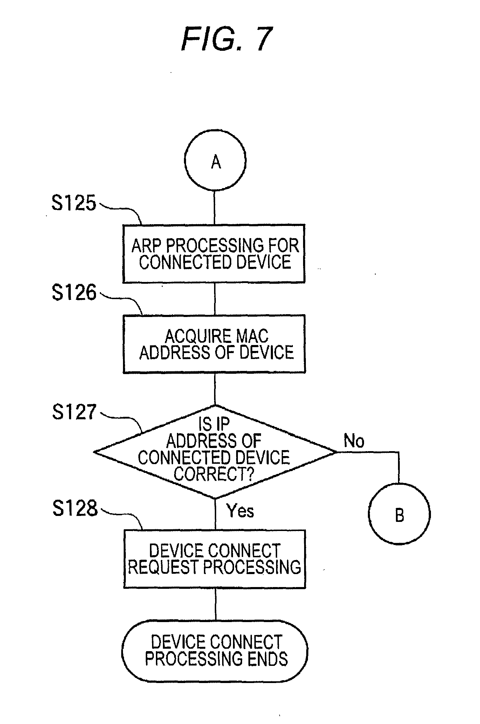

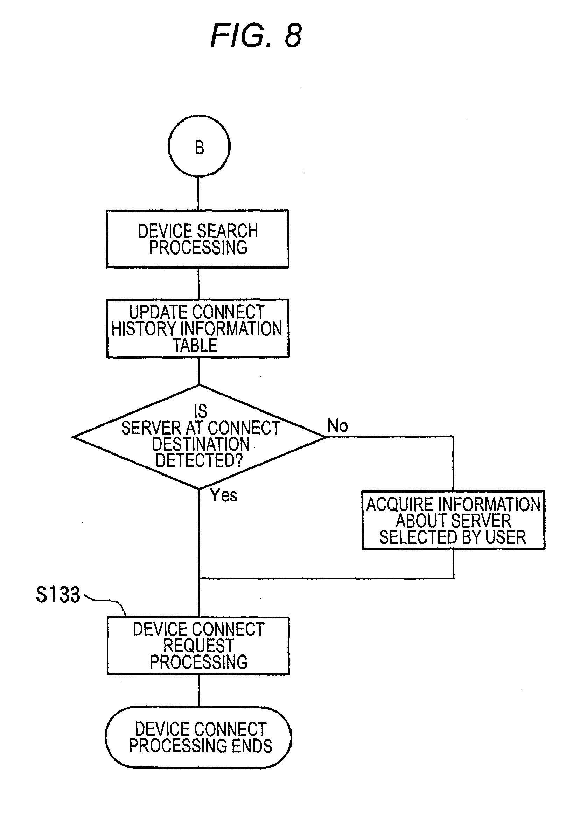

Fig. 1 is a block diagram showing an example configuration of a network of an envisaged communication system of an embodiment. Fig. 2 is a block diagram showing a configuration of a portable terminal device of the embodiment. Fig. 3 is a diagram showing an example configuration of a connect destination server table in the portable terminal device shown in Fig. 2. Fig. 4 is a diagram showing an example configuration of a connect history information table in the portable terminal device shown in Fig. 2. Fig. 5 is a sequence chart showing general operation performed when the portable terminal device is connected to a server in the communication system shown in Fig. 1. Fig. 6 is a flowchart showing specifics of connect information acknowledgment processing performed when the portable terminal device shown in Fig. 2 is connected to a network. Fig. 7 is a flowchart showing specifics of device determination processing performed when the portable terminal device shown in Fig. 2 is connected to a network. Fig. 8 is a flowchart showing specifics of device search processing performed when the portable terminal device shown in Fig. 2 is connected to a network. Fig. 9 is a sequence chart showing basic operation for device search and service notification conforming to a UPnP technique.

In the present embodiment, a portable terminal device to which the present invention applies is a movable terminal like; for instance, a portable phone terminal. The terminal is envisaged to be able to connect with a network that is present at home, or the like, by utilization of a wireless communication function built in the terminal. Further, for instance, an envisaged case for a network to which the portable terminal device is connected is that there is a communication system, such as that shown in Fig. 1.

Mutually-independent two networks A1 and B2 are present in the communication system shown in Fig. 1. The one network A1 includes servers 12 to 14, a renderer device 15, and a WLAN (Wireless Local Area Network) router 16. The other network B2 includes a WLAN router 23 and servers 21 and 22. The portable terminal 11 corresponding to the portable terminal device of the present invention is equipped with a WLAN device and capable of connecting to both the network A1 and the network B2.

Envisaged example down-to-earth usage of the communication system shown in Fig. 1 includes previously managing contents consisting of streaming data; for instance, moving images and music, by means of each of the servers; making an access from the portable terminal 11 to each of the servers via the respective networks A1 and B2; and reproducing the streaming data acquired from the respective servers by means of the portable terminal 11 or remotely controlling the portable terminal 11 such that the contents acquired from the respective servers are reproduced by the renderer device 15. The following descriptions provide an explanation about a specific example in which the portable terminal 11 itself reproduces streaming data from the contents acquired from each of the servers.

Principal constituent elements of the portable terminal 11 shown in Fig. 1 are shown in Fig. 2. By reference to Fig. 2, the portable terminal 11 has a server content management unit 101, a GUI (Graphical User Interface) 102, a contents management processing unit 103, a plug-in 104, a sound/image output unit 105, a connect destination server name storage unit 106, a transceiving unit 107, a device connect management unit 108, and a connect history information storage unit 109. Each of these constituent elements may be realized by a dedicated electronic circuit or by means of hardware, like a computer, and a program run by the hardware.

The server content management unit 101 shown in Fig. 2 establishes a communication with one of the servers included in the communication network (e.g., the network A1 or the network B2 shown in Fig. 1) located at the connect destination and manages content information acquired from the server. Specifically, when connected to the network A1 at the time of a device search processing request from the GUI 102 or the device connect management unit 108, the server content management unit performs device search processing for the servers 12 to 14 located in the network A1. When connected to the network B2, the server content management unit performs device search processing for the servers 21 to 22 located in the network B2.

When a server is detected by means of device search processing, information about the detected server is transmitted to the device connect management unit 108. When the GUI 102 or the device connect management unit 108 requests a connection to a predetermined server, information about a list of contents stored in a predetermined server is acquired, and the thus-acquired information is provided to the GUI 102. The server content management unit 101 receives an ID of contents from the content management processing unit 103; acquires content data from the URL by reference to an URL (Uniform Resource Locators) of the content data corresponding to the ID of the contents; and provides the content management processing unit 103 with the content data.

The GUI 102 acquires a list of contents from the server content management unit 101 and performs processing for displaying specifics of the list on a screen (not shown) of the portable terminal 11. When the user selects desired contents from the displayed content list and commands reproduction of the thus-selected contents, the GUI 102 sends an ID of the selected contents to the content management processing unit 103. The content management processing unit 103 delivers the content ID received from the GUI 102 to the server content management unit 101; receives content data pertaining to contents corresponding to the ID from the server content management unit 101; and supplies the thus-received content data to the plug-in 104.

The plug-in 104 reads the content data from the content management processing unit 103; selects a plug-in corresponding to the content data; decodes the contents; and provides the sound/image output unit 105 with the contents. The sound/image output unit 105 receives the decoded content data from the plug-in 104 and outputs sound and images.

The connect destination server name storage unit 106 manages, in a connect destination server table, the network ID, the name of the server previously connected via the network, and a device ID of the server while associating them with each other. An example connect destination server table is shown in Fig. 3. Network IDs (NW1, NW2, ...) registered in the connect destination server table are identifies for managing network identification information in the portable terminal 11, and device IDs (S10, S20, ... ) are identifiers for managing device identification information.

The transceiving unit 107 of the portable terminal 11 transfers the message received from the device connected to the network to the server content management unit 101 and the device connect management unit 108 and also transmits a message received from the server content management unit 101 and the device connect management unit 108 to the device connected to the network.

The device connect management unit 108 performs device connect processing for establishing a connection with a specific device at the time of connection with a network in response to a request from the GUI 102 and the connect destination server name storage unit 106. Detailed processing will be described later. The device connect management unit 108 manages information about and a status of a device connected to the network; receives information about a detected device notified by the server content management unit 101; and stores the information in the connect history information storage unit 109.

The device history information storage unit 109 manages a connect history information table and registers the device identification information or network identification information received from the device connect management unit 108 into the connect history information table. Fig. 4 shows an example connect history information table. As shown in Fig. 4, the connect history information table retains network identification information (an SSID, a NW address, an NWID, or the like) and identification information (a device ID, a device name, a MAC address, an IP address, a DDD/SDD, or the like) about a device connected to the network (a device detected through device search processing) in a mutually-associated manner.

Specific example operation of the portable terminal 11 shown in Fig. 2 is now described. Fig. 5 shows a connect sequence employed when the portable terminal 11 is re-connected to the server 21 provided in the network B2 in a case where the communication system shown in Fig. 1 is utilized. Specifically, since the portable terminal 11 has once connected to the server 21, it is envisaged that the portable terminal attempts to make reconnection with the same server 21. Since the portable terminal 11 has once connected to the server 12 in the network A1 before connecting to the server 21 this time, the portable terminal 11 is assumed to switch a connect destination from the network A1 to the network B2. Further, device identification information about the server 21 in the network B2 (i.e., an IP address, a network address, and an SSID of a network) is assumed remain unchanged when compared with that employed for previous connection.

### (1) Server reconnection processing

The portable terminal 11 shown in Figs. 1 and 2 is equipped with a WLAN (Wireless Local Area Network) device, and hence the portable terminal 11 establishes connection for a communication line of the WLAN with a WLAN router 23 that is an access point of the network B2 (steps S101 and S102 shown in Fig. 5). The device connect management unit 108 acquires an SSID (NWB) of the network B2 that is a connect destination at that time (step S103). Subsequently, an IP address of the portable terminal 11 (e.g., "192.168.0.7") and a network address (e.g., "192.168.0.0/24") are acquired from a DHCP (Dynamic Host Configuration Protocol) server (the WLAN router 23 is assumed to be equipped with a DHCP server function in the configuration) of the portable terminal 11 (step S104 and S105). The device connect management unit 108 of the portable terminal 11 commences device connect processing. First, the device connect management unit 108 performs connect information check processing in accordance with the thus-acquired SSID, IP address, and network address (step S106).

Fig. 6 shows detailed connect information check processing. Connect information check processing shown in Fig. 6 corresponds to specifics of processing performed by the connect device management unit 108 of the portable terminal 11. The specifics will be hereunder described.

The device connect management unit 108 makes a reference to the connect history information table retained in the device history information storage unit 109 (step S120). The device connect management unit 108 compares the thus-acquired SSID with information about the connect history information table (step S121). When the SSID is registered in the connect history information table, information about the server at the connect destination is acquired from the GUI 102 and the connect destination server name storage unit 106 (step S122).

The present embodiment is based on the presumption that the SSID (NWA) is registered in the connect history information table as shown in Fig. 4; hence, information about the server that is a connect destination is acquired in step S122. If the SSID is not registered in the connect history information table, the device connect management unit 108 performs device search processing (step S121). Detailed device search processing performed by the device connect management unit 108 will be described in detail later.

A server at a connect destination means a server with which an attempt is made to make connection and is designated by the GUI 102 or by a device ID of the server from the connect destination server name storage unit 106. A server designated by the GUI 102 is a server selected by the user via the GUI 102. The server designated by the connect destination server name storage unit 106 is a server registered in the connect destination server table and that was finally browsed last time in the currently-connected network. When the connect destination server is concurrently designated by the GUI 102 and the connect destination server name storage unit 106, the server designated by the GUI 102 is preferentially selected. It is now assumed that a server D (the server 21) registered in the connect destination server table shown in Fig. 3 is designated as a server at a connect destination by the connect destination server name storage unit 106.

After acquiring information about the server at the connect destination (step S122), the device connect management unit 108 compares the thus-acquired network address and the information about the server at the connect destination with information in the connect history information table. When no change is present in the network address and when the server at the connect destination is registered in the connect history information table, device-alive determination processing will be commenced (steps S123 and S124).

When a reference is made to the connect history information table shown in Fig. 4, the thus-acquired network address (192.168.0.0/24) matches the information registered in the connect history information table. Since the server D (the server 21) is registered, the portable terminal 11 commences device-alive determination processing.

If a change has been made to the network address or if the server at the connect destination is not registered in the connect history information table, device search processing is performed (steps S123 and S124).

Through device-alive determination processing, the device connect management unit 108 acquires an IP address of the server at the connect destination by reference to the connect history information table. In order to solve a MAC (Medial Access Control) address corresponding to the IP address, an ARP (Address Resolution Protocol) packet is sent by means of broadcast transmission (step S125).

The portable terminal 11 now sets an IP address (192.168.0.5) of the server 21 as an IP address of the ARP packet and sends the packet. When the IP address in the received ARP packet coincides with the address of the device connected to the network B2, a MAC address of the matched device is set and returns the MAC address to the portable terminal 11 (steps S107 and S108). Since the IP address of the server 21 is set in the received ARP packet, the server 21 returns its MAC address. The device connect management unit 108 acquires a MAC address from the received ARP packet (step S126).

When the history information about the connect device is present in the connect history information table in step S124 shown in Fig. 6, the device connect management unit 108 performs device-alive determination processing shown in Fig. 7. Device-alive determination processing shown in Fig. 7 is hereunder described.

The device connect management unit 108 first compares the thus-acquired MAC address with a MAC address corresponding to the server at the connect destination in the connect history information table. When a match exists between the MAC addresses, the server at the connect destination is determined to be connected to the network server B2, and device connect request processing for the server at the connect destination is commenced (step S127).

The embodiment is based on the assumption that the MAC address (dd:dd.dd:dd:dd:dd:dd:dd) in the ARP packet received by the portable terminal 11 matches the MAC address in a field for the server 21 in the connect history information table shown in Fig. 4; hence, device connect request processing is commenced. If no match exists between the MAC addresses, a change is determined to have been made to the IP address of the server at the connect destination, and device search processing will be commenced (step S127).

During device connect request processing, the IP address of the server at the connect destination is provided to the server content management unit 101, thereby establishing connection with the server at the connect destination and requesting acquisition of content information held in the server at the connect destination. The server content management unit 101 transmits a content information acquisition request, which is a UPnP AV message, to the server at the connect destination according to the IP address of the server at the connect destination received from the device connect management unit 108 and the DDD information or the SDD information, thereby acquiring the content information retained in the server at the connect destination (step S128).

The portable terminal 11 transmits the content information acquisition request to the server 21, thereby acquiring content information in the server 21 (steps S111 and S112). Subsequently, the portable terminal 11 displays the thus-acquired content information on the screen in the form of a list; acquires from the server 21 contents selected by the user; and reproduces the contents (e.g., moving images, music, and the like) in the form of streaming data.

Therefore, when connection is made to a specific server in a network differing from the previously-connected network (the server selected by the user or the server finally browsed last time), device search processing is omitted according to the connect history information in the connect history information storage unit 109, so that the user can connect to the specific server in a short period of time. In addition to omission of device search processing, the DDD or SDD of the device once detected in the past is stored. Therefore, processing for acquiring a DDD or SDD of a normally-connected device, such as a home appliance and a desktop PC, can be diminished.

### (2) Device search processing

Device search processing performed by the foregoing device connect management unit 108 is now described by reference to Fig. 8. The device connect management unit 108 controls device search processing.

When the portable terminal 11 is connected to the network, device search processing performed by the device connect management unit 108 is performed (condition 1) in a case where network identification information about the network is not registered in the connect history information table or the information has been changed and (condition 2) in a case where device identification information about the server at the connect destination is not registered in the connect history information table or information has been changed. When the conditions are fulfilled, the device connect management unit 108 requests the server content management unit 101 to perform device search processing (step S129).

The server content management unit 101 performs device search processing in accordance with the M-SEARCH message. When the device is detected, information about the detected device is delivered to the device connect management unit 108. The device connect management unit 108 reflects the device identification information about the device on the connect history information table held in the connect history information storage unit 109 (step S130).

After updated the connect history information table, the device connect management unit 108 compares information about the server at the connect destination designated by the GUI 102 or the connect destination server name storage unit 106 with the device identification information in the connect history information table, thereby determining whether or not the server at the connect destination has been detected (step S131). When the server at the connect destination can have been detected, device connect request processing is commenced. On the contrary, when the server at the connect destination cannot have been detected, names and IDs of all devices detected in the connected network, which are registered in the connect history information table, are provided as device list information to the GUI 102. The GUI 102 displays a list of all of the device names, thereby prompting the user to select the server at the connect destination. When the user has selected the server at the connect destination, the device connect management unit 108 receives a device ID of the server at the connect destination from the GUI 102, thereby commencing device connect request processing (step S132). During device connect request processing, the device connect management unit 108 performs processing similar to that pertaining to step S128, thereby making connection with the server at the connect destination (step S133).

### (3) Connect history information table update processing

Connect history information table update processing performed by the device connect management unit 108 is now described.

### (a) A case of new connection of the terminal to a network

When the portable terminal 11 newly connects to a network, the device connect management unit 108 requests device search processing from the server content management unit 101; receives information about a list of devices detected through device search processing and a service notice of the UPnP device; and newly registers the network identification information and information about the detected device, in a mutually-associated manner, in the connect history information table.

### (b) A case of re-connection of the terminal to the network (second connection or subsequent connection)

When the portable terminal re-connects the network to which the portable terminal has once connected and when a change has been made to the network identification information (a network address), the device connect management unit 108 requests device search processing from the server content management unit 101; receives information about a list of detected devices; updates corresponding network identification information in the connect history information table; and updates the device identification information to the information received from the server content management unit 101. When the device registered before update processing cannot be detected through device search processing, the information is discarded.

When direct connection cannot have been made to a predetermined device despite network identification information remaining unchanged, the device connect management unit 108 requests device search processing from the server content management unit 101 and receives information about a list of detected devices from the server content management unit 101. When a change has been made to the device identification information (an IP address, a DDD, or an SDD) about the predetermined device, the connect history information table is updated to the information. When the predetermined device is not detected, the connect history information table is not particularly updated. When a new device is detected, information about the device is registered in the connect history information table.

(C) A case of the terminal being connected to a network When a UPnP device is newly connected to a network in the middle of connection being newly or again made to the network and when an ssdp:alive message is received from the device, information about the device is received from the server content management unit 101. Device identification information is newly registered as a device connected to the network. Moreover, when an ssdp:byebye message is received from the connected device, the connect history information table is not particularly updated.

When the user requests device search processing from the GUI 102, the server content management unit 101 performs device search processing. The device connect management unit 108 receives the detected device identification information from the server content management unit 102. When a change has been made to the device identification information or when a new device has been detected, the information about the device is updated or registered.

In the mode of the embodiment described above, the connect history information table is used for connection with a desired device after the portable terminal has connected to the network. However, specifics of the connect history information table may also be provided to the GUI 102 while the portable terminal 11 remains non-connected to the network, and the specifics may be displayed on the screen, to thus provide the user with the specifics.

In the foregoing embodiment, a device to be connected is taken as a server retaining contents. However, the device is not limited to the server. The device to be connected may also be a device to be found and controlled by means of a device having a UPnP control point function; for instance, the render device 15 that reproduces contents upon receipt of a request for reproducing contents. When the target is the render device 15, the portable terminal 11 directly transmits a UPnP AV message without performing device search processing, thereby controlling and managing the render device 15.

The foregoing embodiment is based on the assumption that a communication network at a connect destination is a home network. However, the communication network is not limited to the home network. Connection can also be made to a public wireless LAN or a local area network established in a corporation, a school, or the like.

Although the present invention has been described in detail by reference to the specific embodiment, it is manifest to those skilled in the art that the present invention be susceptible to various alterations or modifications without departing from the spirit and scope of the present invention.

The present patent application is based on Japanese Patent Application (JP-A-2008-007999) filed on January 17, 2008, the entire subject matter of which is incorporated herein by reference.

### <Industrial Applicability>

As mentioned above, the communication terminal device and the communication device connect control method of the present invention can be utilized in a case where a movable portable terminal; for instance, a portable phone terminal, connects to various devices connected to a communication network, such as a home network, thereby acquiring or managing contents. In particular, the communication terminal device and the communication device connect control method can be made useful in significantly shortening a required connect time by omitting device search processing when connection is again made to the device connected in the past even in a case where a communication network at a connect destination has changed.

## Claims

1. A communication terminal device that connects to an arbitrary communication device via a communication network, comprising:
a transceiving unit that connects to the communication network so as to perform communication;
a connect history information storage unit that retains information about the communication network and information about a communication device connected to the communication network in a mutually-associated manner; and
a device connect management unit that determines, in accordance with information about the communication network retained in the connect history information storage unit, whether or not connection with the communication device is established and that connects to the communication device, in accordance with information about the communication device connected to the communication network retained in the connect history information storage unit, when connection is possible.

2. The communication terminal device according to claim 1, further comprising:
a device detection unit that detects a communication device which is connectable via the communication network, wherein the connect history information storage unit stores, in a mutually-associated fashion, network identification information about the connected communication network and device identification information about the communication device detected by the device detection unit via the communication network.

3. The communication terminal device according to claim 2, wherein the connect history information storage unit retains, as the device identification information, both fixed address information and variable address information about the communication device.

4. The communication terminal device according to claim 3, wherein the fixed address information is a MAC address.

5. The communication terminal device according to claim 3 or 4, wherein the variable address information is an IP address.

6. The communication terminal device according to any one of claims 3 through 5, wherein the device connect management unit acquires the variable address information about the communication device from the connect history information storage unit and causes the transceiving unit to transmit a fixed address request for inquiring of the communication network about fixed address information corresponding to the acquired variable address information;
compares first fixed address information received by the transceiving unit as a response to the fixed address request with second fixed address information about the communication device stored in the connect history information storage unit; and
determines that the communication device is connected to the communication network when a match exists between the first fixed address information and second fixed address information, and transmits a control message to the communication device while taking the variable address information as an address when the communication device is determined to be connected to the communication network.

7. The communication terminal device according to claim 6, wherein the connect management unit performs processing for detecting the communication device by use of the device detection unit when the communication device is determined not to be connected.

8. A communication device connect control method for establishing connection with an arbitrary communication device via a communication network, the method comprising:
recording information about the communication network and information about a communication device connected to the communication network in a mutually-associated manner; determining, in accordance with information about the recorded communication network, whether or not connection with the communication device is established; and
establishing connection with the communication device, in accordance with information about the communication device connected to the recorded communication network, when connection is possible.

9. A program for causing a computer to execute processing pertaining procedures of the communication device connect control method defined in claim 8.

## Amended claims

### Amended claims under Art. 19.1 PCT

**1.** A communication terminal device that connects to an arbitrary communication device by way of a communication network, comprising:
a transceiving unit that connects to the communication network so as to perform communication;
a connect history information storage unit that retains network identification information about the communication network and fixed address information and variable address information about a communication device connected to the communication network in a mutually-associated manner;
a device detection unit that detects a communication device that is connectable via the communication network; and
a device connect management unit that acquires the variable address information about the communication device from the connect history information storage unit and causes the transceiving unit to transmit a fixed address request for inquiring of the communication network about fixed address information corresponding to the acquired variable address information based on the network identification information obtained by connecting the communication network,
compares first fixed address information received by the transceiving unit as a response to the fixed address request with second fixed address information about the communication device stored in the connect history information storage unit,
determines that the communication device is connected to the communication network when a match exists between the first fixed address information and second fixed address information, and
connects to the communication device when the communication device is determined to be connected to the communication network;
wherein the connect management unit performs processing for detecting the communication device by use of the device detection unit when the communication device is determined not to be connected.

**2.** The communication terminal device according to claim 1, wherein the connect history information storage unit stores, in a mutually-associated fashion, network identification information about the connected communication network and device identification information about the communication device detected by the device detection unit by way of the communication network.

**3.** (Deleted)

**4.** The communication terminal device according to claims 1 or 2, wherein the fixed address information is a MAC address.

**5.** The communication terminal device according to any one of claim 1, 2 and 4, wherein the variable address information is an IP address.

**6.** (Deleted)

**7.** (Deleted)

**8.** A communication device connect control method for establishing connection with an arbitrary communication device by way of a communication network, the method comprising:
recording network identification information about the communication network and fixed address information and variable address information about a communication device connected to the communication network in a mutually-associated manner;
acquiring the variable address information about the communication device and transmitting a fixed address request for inquiring of the communication network about fixed address information corresponding to the acquired variable address information, based on the network identification information obtained by connecting the communication network;
comparing first fixed address information received as a response to the fixed address request with second fixed address information about the communication device;
determining that the communication device is connected to the communication network when a match exists between the first fixed address information and second fixed address information, and connecting to the communication device.

**9.** A program for causing a computer to execute processing pertaining procedures of the communication device connect control method defined in claim 8.
